# EUROPEAN PATENT APPLICATION

(11) **EP 4 459 841 A1**
(43) Date of publication of application: **06.11.2024**
(21) Application number: 22915579.1
(22) Date of filing: 21.11.2022
(51) Int. Cl.: H02K 1/18, H02K 3/487, H02K 15/02, H02K 15/06

(54) **STATOR CORE, STATOR, METHOD FOR MANUFACTURING STATOR CORE, AND METHOD FOR MANUFACTURING STATOR**

(30) Priority: 27.12.2021 JP 2021212754
(71) Applicant: Nidec Corporation, Minami-ku, Kyoto-shi, Kyoto 601-8205 (JP)
(72) Inventor: HASHIMOTO, Ayumu, Kyoto-shi, Kyoto 601-8205 (JP)
(74) Representative: Viering, Jentschura & Partner mbB Patent- und Rechtsanwälte
(86) International application number: PCT/JP2022/042944
(87) International publication number: WO 2023/127348

(57) **Abstract**

A stator core includes a tooth portion having a first core and a second core that is connected to a radially inner side of the first core. In at least one slot between the tooth portions adjacent to each other in the circumferential direction, the first core includes a first umbrella portion at a radially inner end portion, the first umbrella portion being located on both sides in the circumferential direction of the slot and protruding in the circumferential direction, and the second core includes a second umbrella portion at a radially inner end portion, the second umbrella portion being located on both sides in the circumferential direction of the slot and protruding in the circumferential direction.

## Description

### TECHNICAL FIELD

The present invention relates to a stator core, a stator, a method of manufacturing a stator core, and a method of manufacturing a stator.

### BACKGROUND ART

A stator including a stator core having a slot and a coil disposed in the slot is known. The stator core includes a core back, a plurality of teeth, and a plurality of umbrellas. The core back is annular. The plurality of teeth extend radially inward from the core back. The plurality of umbrellas are connected to the radially inner ends of the teeth respectively and extend to both sides in the circumferential direction. Such a stator core is disclosed in, for example, JP 2005-160138 A (Patent Literature 1).

Patent Literature 1 discloses a stator core in which a coupling portion is provided at a tip of a magnetic pole body in a yoke/magnetic pole body laminate, a fitting hole enabling fitting into the coupling portion from an axial center direction of the yoke/magnetic pole body laminate is provided in a magnetic pole tooth laminate, a minute bulge to be engaged with the other portion is provided in either one of the coupling portion and the fitting hole, the coupling portion is fitted into the fitting hole to couple the magnetic pole tooth laminate to the magnetic pole body, and the magnetic pole body and the magnetic pole tooth laminate are integrally fixed by the minute bulge.

### CITATIONS LIST

### PATENT LITERATURE

Patent Literature 1: JP 2005-160138 A

### SUMMARY OF INVENTION

### TECHNICAL PROBLEMS

In Patent Literature 1 described above, the magnetic pole tooth laminate is connected after the winding is arranged on each magnetic pole body in the yoke/magnetic pole body laminate. When this operation is performed, the winding may be shifted.

When a coil, a wedge, an insulating paper, and the like are disposed on the stator core in this manner, there is a problem that the coil, the wedge, the insulating paper, and the like are disturbed.

In view of the above problem, an object of the present invention is to provide a stator core, a stator, a method of manufacturing a stator core, and a method of manufacturing a stator that suppress disturbance of at least one of a coil, a wedge, and an insulating paper.

### SOLUTIONS TO PROBLEMS

A stator core, according to a first aspect of the present invention, includes a first core and a second core included in a tooth portion. The second core is connected to a radially inner side of the first core. In at least one slot between the tooth portions adjacent to each other in a circumferential direction, the first core includes, at a radially inner end portion, a first umbrella portion located on both sides of the slot in the circumferential direction and protruding in the circumferential direction, and the second core includes, at a radially inner end portion, a second umbrella portion located on both sides of the slot in the circumferential direction and protruding in the circumferential direction.

A stator, according to a second aspect of the present invention, includes the stator core according to the first aspect, and a wedge disposed on a radially inner side of the slot. The wedge includes a first shape portion extending in the circumferential direction, two second shape portions extending radially outward, and bent portions connecting both ends of the first shape portion and radially inner ends of the second shape portions. The bent portions contact the first umbrella portion.

A method of manufacturing a stator core, according to a third aspect of the present invention, includes a step of connecting a second core to a radially inner side of a tooth portion of a first core. In at least one slot between the tooth portions adjacent to each other in the circumferential direction, the first core includes, at a radially inner end portion, a first umbrella portion located on both sides of the slot in the circumferential direction and protruding in the circumferential direction, and the second core includes, at a radially inner end portion, a second umbrella portion located on both sides of the slot in the circumferential direction and protruding in the circumferential direction.

A method of manufacturing a stator, according to a fourth aspect of the present invention, includes a step of manufacturing a stator core by the method of manufacturing the stator core according to the third aspect, and a step of arranging a wedge in at least one slot between the tooth portions adjacent to each other in the circumferential direction. The step of connecting is performed after the step of arranging the wedge.

### ADVANTAGEOUS EFFECTS OF INVENTION

The present invention is capable of providing a stator core, a stator, a method of manufacturing a stator core, and a method of manufacturing a stator that suppress disturbance of at least one of a coil, a wedge, and an insulating paper.

### BRIEF DESCRIPTION OF DRAWINGS

FIG. 1 is a cross-sectional view of a cross section perpendicular to the axial direction of a stator of an embodiment.
FIG. 2 is a perspective view of a region II in FIG. 1.
FIG. 3 is a cross-sectional view of a region III in FIG. 1.
FIG. 4 is a perspective view in which a second core is omitted in FIG. 2.
FIG. 5 is a perspective view in which a second core is omitted in FIG. 3.
FIG. 6 is a flowchart illustrating a method of manufacturing a stator according to an embodiment.
FIG. 7 is a cross-sectional view illustrating a step in a method of manufacturing a stator.

### DESCRIPTION OF EMBODIMENT

Hereinafter, an embodiment of the present invention will be described with reference to the drawings. Note that in the following drawings, an identical or corresponding component is denoted by an identical reference sign, and the description will not be repeated.

In the following description, a direction in which the central axis of a stator 1 extends, that is, a penetrating direction of a slot 24, is referred to as an "axial direction". One side along the axial direction is referred to as a lower side, and the other side is referred to as an upper side. Upward and downward directions are used in specifying the positional relationship, and do not limit the actual directions. That is, a downward direction does not necessarily mean the direction of gravity. The axial direction is not particularly limited, and includes a vertical direction, a horizontal direction, and a direction intersecting these directions.

A direction orthogonal to the central axis of a stator 1 is referred to as a "radial direction". One side along the radial direction is referred to as an inner side, and the other side along the radial direction is referred to as an outer side. Moreover, a direction along an arc centered on the central axis of the stator 1 is referred to as a "circumferential direction".

In addition, in the drawings used in the following description, for the purpose of emphasizing a characteristic portion, a characteristic portion may be illustrated in an enlarged manner for convenience. Therefore, the dimensions and ratios of respective components are not necessarily the same as actual ones. For the same purpose, less characteristic portions may be omitted from the drawings.

### (Stator)

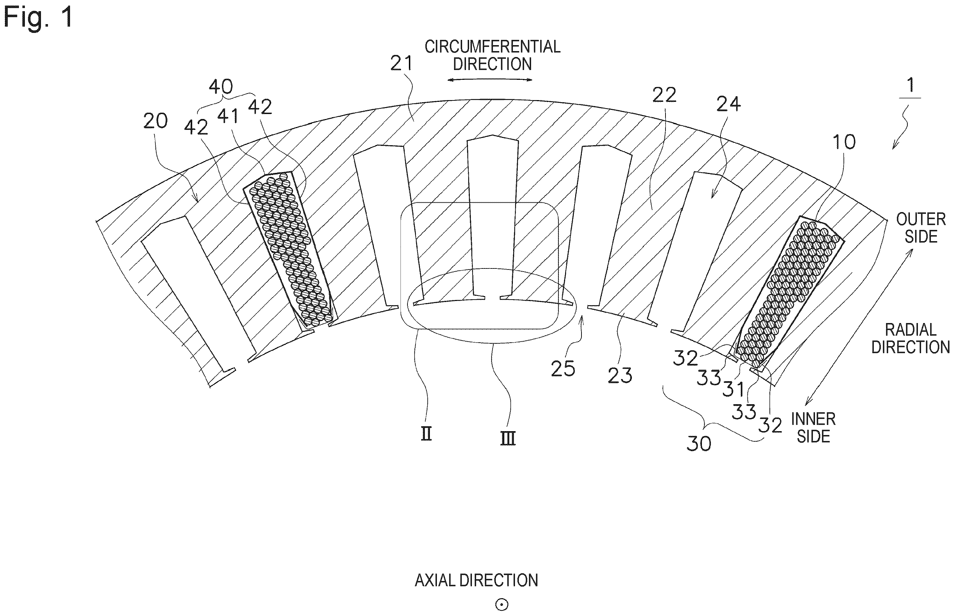

FIG. 1 is a cross-sectional view illustrating a part of the stator 1 of the present embodiment. In FIG. 1, coils 10 in some slots 24 are omitted. The stator 1 and a stator core 20 of the present embodiment will be described with reference to FIG. 1.

As illustrated in FIG. 1, the stator 1 is a component of a motor, and interacts with a rotor (not shown) to generate rotational torque. The stator 1 has a coil 10, the stator core 20, a wedge 30, and an insulating paper 40. The stator 1 of the present embodiment is applied with distributed winding in which a coil wire of the coil 10 is wound across several slots 24.

### <Stator core>

The stator core 20 is formed in a hollow columnar shape. The stator core 20 is formed by laminating thin silicon steel plates. The stator core 20 includes a core back 21, a plurality of tooth portions 22, and a plurality of umbrella portions 23.

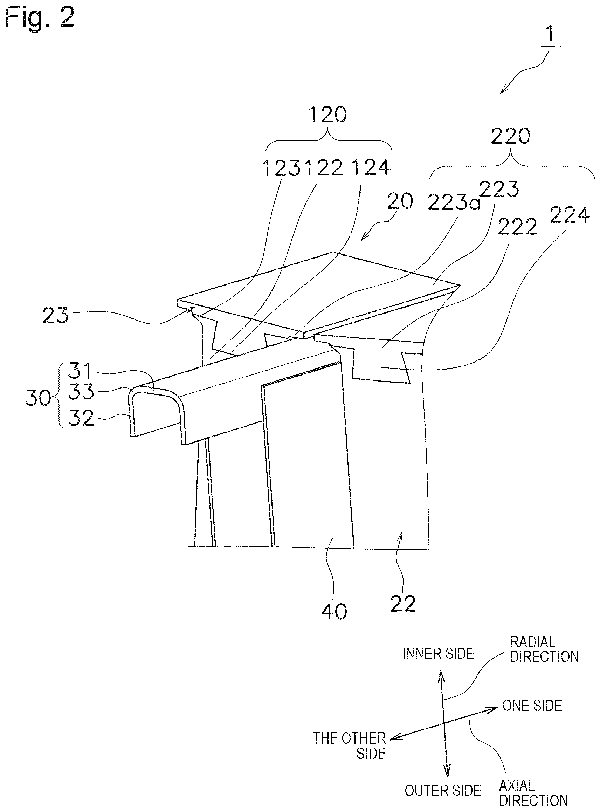

In the present embodiment, as illustrated in FIGS. 1 and 2, the dimensions of the core back 21, the tooth portion 22, and the umbrella portion 23 are the same in the axial direction. In addition, the upper surface of the core back 21, the upper surface of the tooth portion 22, and the upper surface of the umbrella portion 23 are located on the same plane. The lower surface of the core back 21, the lower surface of the tooth portion 22, and the lower surface of the umbrella portion 23 are located on the same plane. Note that the axial dimensions of the core back 21, the tooth portion 22, and the umbrella portion 23 may be different.

The core back 21 is annular. The core back 21 of the present embodiment is configured of one member. That is, the core back 21 is configured of one component rather than a plurality of components that can be divided in the circumferential direction.

The plurality of tooth portions 22 extend in the radial direction from the core back 21. The tooth portions 22 are disposed in the circumferential direction.

Specifically, the tooth portions 22 extend radially inward from the core back 21. The tooth portions 22 are disposed at equal intervals in the circumferential direction at the radially inner end of the core back 21. Note that the circumferential width of the tooth portion 22 of the present embodiment is constant, but may not be constant.

The slot 24 is provided between the tooth portions 22 adjacent to each other in the circumferential direction. The slot 24 is a gap in the circumferential direction.

The plurality of slots 24 penetrate in the axial direction. The circumferential width of the slot 24 increases toward the radially outer side. The circumferential width of the slot 24 in the present embodiment gradually increases toward the radially outer side.

The slot 24 has a slot open 25 that is an opening in the radial direction of the slot 24. The slot open 25 is smaller than the circumferential width of the space accommodating the coil 10 in the slot 24.

The plurality of umbrella portions 23 are located on both sides of the slot 24 in the circumferential direction and protrude in the circumferential direction. Specifically, the plurality of umbrella portions 23 are connected to the radially inner end portions of the tooth portions 22 respectively and extend to both sides in the circumferential direction. That is, the circumferential width of the umbrella portion 23 is larger than the circumferential width of the radially inner end of the tooth portion 22. The plurality of umbrella portions 23 are disposed at equal intervals in the circumferential direction. When used in a motor, the plurality of umbrella portions 23 face the rotor.

The stator core 20 includes a first core 120 and a second core 220. The first core 120 and the second core 220 will be described later.

### <Coil>

The material constituting the coil 10 is not limited, but is a copper wire in the present embodiment. The coil wire constituting the coil 10 is in distributed winding. Specifically, it is distributed winding in which a coil bundle in which a coil wire is wound in an annular shape is inserted into the plurality of slots 24. The coil wire of the present embodiment is a round wire, but is not particularly limited, and may be a flat wire or the like.

The annular coil 10 has two coil side portions and a coil crossover portion. The two coil side portions are housed in the slots 24. Specifically, the slot 24 in which one coil side portion is housed is different from the slot 24 in which the other coil side portion is housed. The slot 24 in which one coil side portion is housed and the slot 24 in which the other coil side portion is housed may be adjacent to each other or may be arranged in the circumferential direction via another slot 24.

The coil crossover portion connects the two coil side portions. The coil crossover portion is disposed on both sides in the axial direction. Specifically, the coil crossover portion positioned on the axially upper side is an upper coil end connecting the upper end portions of the two coil side portions. The coil crossover portion positioned on the axially lower side is a lower coil end connecting the lower end portions of the coil side portions.

### <Wedge>

The wedge 30 is disposed radially inner side of the slot 24. Specifically, the wedge 30 is disposed between the coil 10 inserted into the slot 24 and the stator core 20. In FIG. 1, the wedge 30 closes the slot open 25. The wedge 30 insulates the stator core 20 from the coil 10. In FIG. 2, the axial length of the wedge 30 is greater than the axial length of the slot 24. Note that the axial length of the wedge 30 is not limited.

The wedge 30 of the present embodiment has a U-shape as viewed in the axial direction. Specifically, as illustrated in FIG. 2, the wedge 30 includes a first shape portion 31, two second shape portions 32, and bent portions 33. The first shape portion 31 extends in the circumferential direction. The two second shape portions 32 extend radially outward. The bent portions 33 connect both ends of the first shape portion 31 and the radially inner ends of the second shape portions 32. The bent portion 33 is curved. The first shape portion 31, the second shape portions 32, and the bent portions 33 may be formed of one member, or different members that are connected to each other.

### <Insulating paper>

The insulating paper 40 covers the coil 10 inserted into the slot 24. The insulating paper 40 is arranged along the tooth portion 22 partitioning the space excluding the radially inner side in the slot 24. The insulating paper 40 of the present embodiment has a U-shape. Specifically, the insulating paper 40 includes a circumferential portion 41 extending in the circumferential direction and two radial portions 42 extending radially inward from both ends of the circumferential portion 41.

In FIG. 1, the opening of the insulating paper 40 and the opening of the wedge 30 are in directions opposite to each other.

### <First core and second core>

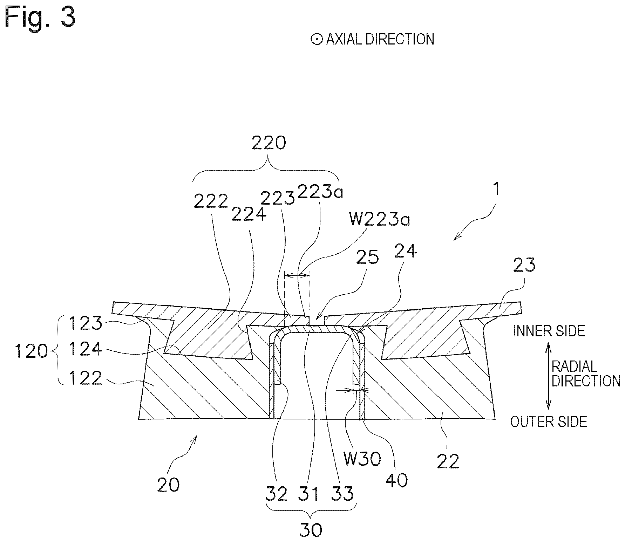

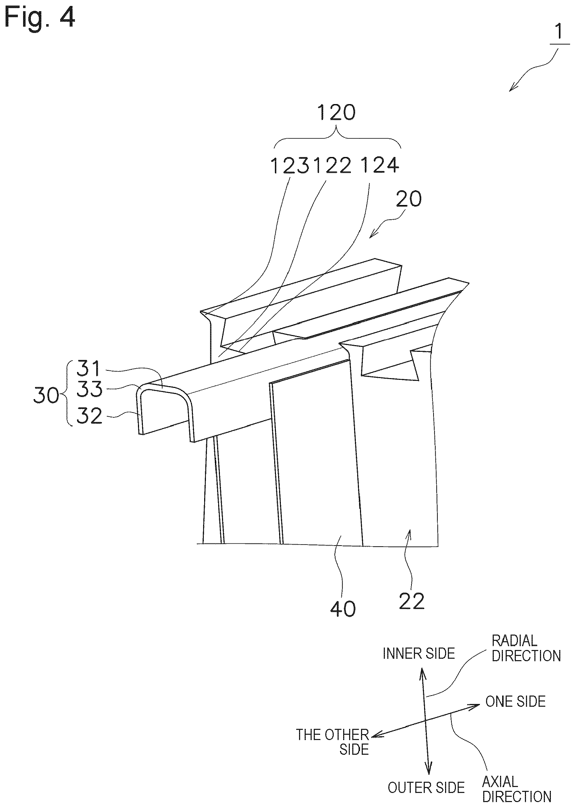

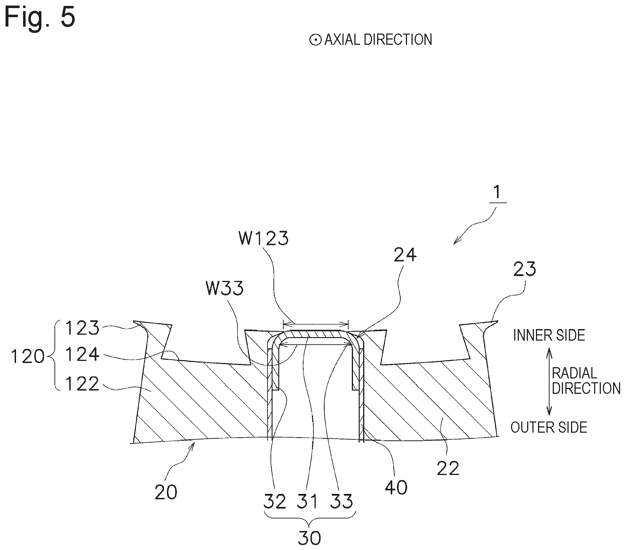

Here, the first core 120 and the second core 220 of the stator core 20 will be described with reference to FIGS. 1 to 5. FIG. 2 is a perspective view of a state in which the wedge 30 and the insulating paper 40 are provided to one slot 24 in a region II of FIG. 1. FIG. 3 is a cross-sectional view of a state in which the wedge 30 and the insulating paper 40 are provided in a region III of FIG. 1. FIG. 4 is a perspective view in which the second core 220 is omitted in FIG. 2. FIG. 5 is a perspective view in which the second core 220 is omitted in FIG. 3. In FIGS. 2 to 5, the coil 10 inside the slot 24 is omitted.

As illustrated in FIGS. 2 and 3, the tooth portion 22 includes the first core 120 and the second core 220. The umbrella portion 23 also includes the first core 120 and the second core 220. Each of the first core 120 and the second core 220 is formed of one member. The first core 120 and the second core 220 are separate members.

The second core 220 is connected to the radially inner side of the first core 120. Therefore, the first core 120 is disposed on the radially inner side of the second core 220.

The first core 120 includes the core back 21 illustrated in FIG. 1, a first tooth portion 122 illustrated in FIGS. 2 to 5, and a first umbrella portion 123. Here, the first core 120 is formed of the core back 21, the first tooth portion 122, and the first umbrella portion 123. The core back 21 is located at the radially outer end of the first core 120. The first tooth portion 122 is located on the radially inner side the core back 21. The first umbrella portion 123 is located on the radially inner side the first tooth portion 122. That is, the first umbrella portion 123 is located at the radially inner end portion of the first core 120. In addition, the first umbrella portion 123 is positioned on both sides in the circumferential direction in one slot 24 and protrudes in the circumferential direction.

As illustrated in FIGS. 2 and 3, the second core 220 includes a second tooth portion 222 and a second umbrella portion 223. Here, the second core 220 is formed of the second tooth portion 222 and the second umbrella portion 223. The second tooth portion 222 is located on the radially inner side the second core 220. The second umbrella portion 223 is located on the radially inner side the second tooth portion 222. That is, the second umbrella portion 223 is located at the radially inner end portion of the second core 220. In addition, the second umbrella portion 223 is positioned on both sides in the circumferential direction in one slot 24 and protrudes in the circumferential direction.

As described above, according to the stator core 20 of the present invention, the first core 120 on the radially outer side has the first umbrella portion 123. Therefore, when the coil 10 is disposed in the slot 24 of the stator core 20, the second core 220 can be connected to the first core 120 in a state where the coil 10 is held by the first umbrella portion 123 located on both sides in the circumferential direction. Therefore, the present invention can provide the stator core 20 that suppresses at least the disturbance of the coil 10. Furthermore, by suppressing the disturbance of the coil 10, workability can be improved and magnetic characteristics can be improved.

The stator core 20 may further include a third core formed of one member, but is preferably formed of the first core 120 and the second core 220 from the viewpoint of suppressing deterioration of the magnetic characteristics.

Here, as illustrated in FIGS. 2 and 3, the circumferential width at the radially inner end of the second core 220 is larger than the circumferential width at the radially inner end of the first core 120. Therefore, the second core 220 covers the first core 120 in the circumferential direction.

The first umbrella portion 123 overlaps the second umbrella portion 223 in the radial direction. By making the circumferential width of the second umbrella portion 223 larger than the circumferential width of the first umbrella portion 123, the circumferential width of the slot open 25, which is the radial opening, can be reduced. Accordingly, the magnetic characteristics can be improved.

In the present embodiment, the entire first umbrella portion 123 overlaps the second umbrella portion 223 in the radial direction. Both circumferential ends of the second umbrella portion 223 do not overlap the first umbrella portion 123 in the radial direction, and the rest of the second umbrella portion 223 overlaps the first umbrella portion 123 in the radial direction. Therefore, the second umbrella portion 223 covers the first umbrella portion 123 in the circumferential direction.

The first umbrella portion 123 faces the second umbrella portion 223 in the radial direction. By making the circumferential width of the second umbrella portion 223 larger than the circumferential width of the first umbrella portion 123, the circumferential width of the slot open 25 can be reduced. Accordingly, the magnetic characteristics can be improved.

In the present embodiment, the entire first umbrella portion 123 faces the second umbrella portion 223 in the radial direction. Both circumferential ends of the second umbrella portion 223 do not face the first umbrella portion 123 in the radial direction, and the rest of the second umbrella portion 223 faces the first umbrella portion 123 in the radial direction.

In the present embodiment, the circumferential width of the second umbrella portion 223 is larger than the circumferential width of the first umbrella portion 123. That is, the second umbrella portion 223 covers the first umbrella portion 113. Therefore, the circumferential width of the slot open 25 formed of the second umbrella portion 223 is smaller than the circumferential width of the slot open 25 formed of the first umbrella portion 123.

Note that the first umbrella portion 123 and the second umbrella portion 223 may be in contact with each other, or another member such as an adhesive may be interposed between them. From the viewpoint of improving the magnetic characteristics, it is preferable that the first umbrella portion 123 and the second umbrella portion 223 are in contact with each other at least at a part thereof.

Here, one of the first core 120 and the second core 220 has a recess 124 recessed in the radial direction, and the other has a protrusion 224 protruding in the radial direction. The protrusion 224 is disposed in the recessed portion of the recess 124 and contacts the recess 124. As a result, the first core 120 and the second core 220 can be easily connected.

The recess 124 and the protrusion 224 are not particularly limited, but are preferably provided at positions different from the umbrella portion 23, and more preferably provided at the circumferential center.

Here, the first core 120 has the recess 124 that is recessed radially outward. The second core 220 has the protrusion 224 protruding radially outward. The protrusion 224 is disposed in the recessed portion of the recess 124 and contacts the recess 124. As a result, since the radial width of the second core 220 can be sufficiently secured, the strength of the second core 220 can be improved.

Specifically, the recess 124 is provided at the radially inner end of the first core 120, and the protrusion 224 is provided at the radially inner end portion of the second core 220. The recess 124 is located at the center in the circumferential direction in the first core 120. The protrusion 224 is located at the center in the circumferential direction in the second core 220. The recess 124 of the first core 120 and the protrusion 224 of the second core 220 extend radially inward.

As illustrated in FIGS. 2 to 5, the bent portion 33 of the wedge 30 contacts the first umbrella portion 123. When the wedge 30 is disposed in one slot 24, the first umbrella portions 123 located on both sides in the circumferential direction contact the bent portions 33 of the wedge 30. Therefore, the second core 220 can be connected to the first core 120 in a state where the wedge 30 is held by the first umbrella portions 123. Therefore, disturbance of the wedge 30 can be suppressed.

As illustrated in FIGS. 2 and 3, the wedge 30 contacts the second umbrella portions 223. The second umbrella portions 223 can more reliably prevent the wedge 30 from protruding radially inward from the slot 24. Here, the first shape portion 31 of the wedge 30 contacts the second umbrella portions 223.

As illustrated in FIG. 5, in at least one slot 24, a maximum width W33 in the circumferential direction between the bent portions 33 is equal to or larger than an interval W123 in the circumferential direction between the first umbrella portions 123. In other words, in at least one slot 24, the circumferential width at the radially outer ends of the second shape portions 32 is equal to or larger than the circumferential interval W123 between the first umbrella portions 123. Accordingly, since the wedge 30 can be easily held by the first umbrella portions 123, it is possible to further suppress the disturbance of the wedge 30.

As illustrated in FIGS. 2 and 3, the second umbrella portion 223 has a protruding portion 223a protruding in the circumferential direction from the first umbrella portion 123. The protruding portions 223a are located on both sides of the slot 24 in the circumferential direction. In the circumferential direction, the protruding portion 223a does not overlap the first umbrella portion 123.

As illustrated in FIG. 3, a length W223a of the protruding portion 223a is equal to or larger than a thickness W30 of the wedge 30. The protruding portion 223a of the second umbrella portion 223 can sufficiently reduce the circumferential width of the slot open 25. Accordingly, the magnetic characteristics can be further improved.

### (Method of manufacturing stator)

With reference to FIGS. 1 to 7, the stator core 20 of the present embodiment and a method of manufacturing the stator 1 including the stator core 20 will be described. In the present embodiment, the stator 1 is manufactured by inserting a coil by an inserter method.

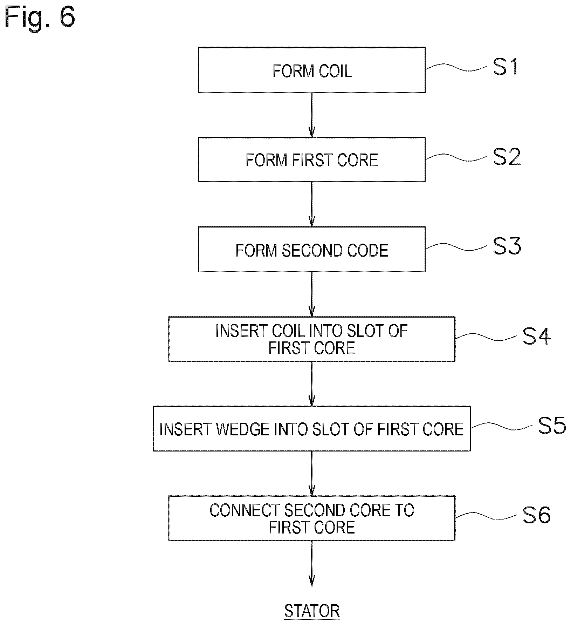

First, as illustrated in FIG. 6, the annular coil 10 is formed (step S1). In step S1, a coil wire is wound in an annular shape to form the coil 10 having two coil side portions accommodated in the slots 24 and a coil crossover portion connecting the two coil side portions and disposed on both sides of the stator core 20 in the axial direction.

In addition, the first core 120 is formed (step S2). In step S2, the first core 120 including the core back 21 illustrated in FIG. 1 and the first tooth portion 122 and the first umbrella portion 123 illustrated in FIGS. 2 and 3 is formed. In addition, the recess 124 recessed radially outward is formed in the first core 120. In the present embodiment, the insulating paper 40 is disposed in the slot 24 formed by the first core 120.

In addition, the second core 220 is formed (step S3). In step S3, the second core 220 including the second tooth portion 222 and the second umbrella portion 223 illustrated in FIGS. 2 and 3 is formed. In addition, the second core 220 is formed with the protrusion 224 that has a shape disposed in the recess 124 of the first core 120 and protrudes radially outward.

Next, the coil 10 is inserted into the slot 24 formed by the first core 120 (step S4). In step S4, since the second core 220 is not disposed, the slot 24 formed by the first core 120 is wider than the slot open 25 illustrated in FIG. 1. Therefore, the coil 10 can be easily inserted into the slot 24. Step S4 of the present embodiment is performed, for example, as follows.

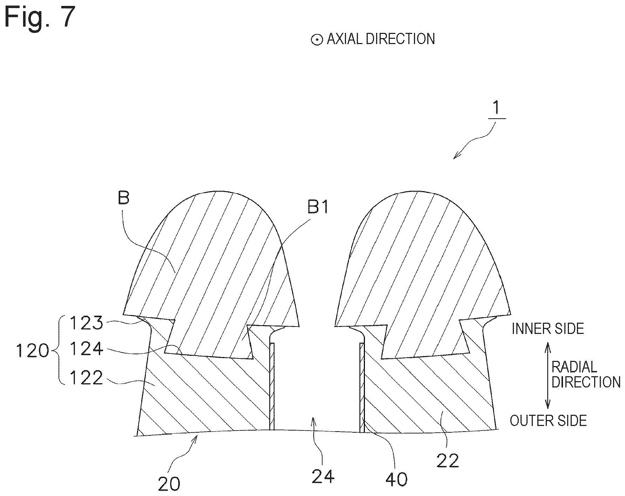

Specifically, as illustrated in FIG. 7, blades B extending in the axial direction are arranged side by side in the circumferential direction of the first core 120 on the radially inner side of the first core 120. In the present embodiment, at least a part of the blade B holding the coil 10 is disposed in the recess 124 of the first core 120. In this manner, since the blade B can be positioned with respect to the first core 120 by arranging the blade B in the recess 124, the strength required for the blade B can be reduced. Therefore, it is possible to reduce the thickness such as reducing the radial width of the blade B, and it is possible to shorten the coil end. In addition, the blade B does not need to have a shape for positioning the blade B with respect to the first core 120 by being in contact with the first umbrella portion 123 in the circumferential direction. Therefore, manufacturing of the blade B is facilitated, the circumferential width of the blade B can be reduced, and the load generated on the coil 10 when the coil 10 is inserted into the slot 24 can be reduced. At this time, the maximum value of the circumferential width of the blade B may coincide with the circumferential width of the radially inner end of the tooth portion 22. Here, the circumferential width of the radially inner end of the tooth portion 22 is a circumferential width between the circumferential tips of the two first umbrella portions 123 of the tooth portion 22.

In FIG. 7, the blade B has a shape adapted to the recess 124. Specifically, the blade B has a protrusion B1 protruding radially outward. The protrusion B1 of the blade is disposed in the recessed portion of the recess 124 of the first core 120, and contacts the recess 124.

Note that the blade B may not have a shape adapted to the recess 124. However, in a case where the blade B has a shape adapted to the recess 124 as in the present embodiment, the thickness of the blade B can be reduced, so that the coil end can be shortened.

The annular coil 10 is held by the blade B. Then, the coil 10 held by the blade B is arranged on one side in the axial direction of the first core 120.

Thereafter, the coil 10 is moved from one side to the other side in the axial direction by a coil moving mechanism (not illustrated) disposed on the radially inner side of the blade B. As a result, the coil 10 can be inserted into the slot 24. When the coil side portion of the coil 10 is inserted into the slot 24, the coil crossover portion on the lower side straddles between the slots 24 on one side of the first core 120, and the coil crossover portion on the other side protrudes from the first core 120.

Next, the wedge 30 is arranged in at least one slot 24 between the tooth portions 22 adjacent to each other in the circumferential direction (step S5). In step S5, the wedge 30 is inserted into the slot 24 formed by the first core 120 (step S5). In step S5, since the second core 220 is not disposed, the slot 24 formed by the first core 120 is wider than the slot open 25 illustrated in FIG. 1. Therefore, the wedge 30 can be easily inserted into the slot 24.

In step S5, the wedge 30 is inserted into the slot 24 using, for example, a wedge pusher. As a result, the wedge 30 can be arranged between the coil 10 and the slot 24. Therefore, when the connecting step S6 described later is performed, the wedge 30 can close the slot open 25.

Next, the second core 220 is connected to the radially inner side of the first tooth portion 122 of the first core 120 (step S6). In step S6 of the present embodiment, the protrusion 224 of the second core 220 is pushed into contact with the recess 124 of the first core 120. As a result, the first core 120 and the second core 220 are connected.

By performing the above steps (steps S1 to S5), the stator core 20 and the stator 1 illustrated in FIGS. 1 to 5 can be manufactured.

As described above, in the present embodiment, the connecting step (step S5) is performed after the step of inserting the coil 10 (step S4) and the step of arranging the wedge 30 (step S5). Therefore, after the coil 10 and the wedge 30 are arranged in the wide slot 24 formed by the first core 120, the second core 220 can be connected to the first core 120 in a state where the coil 10 and the wedge 30 are held by the first umbrella portions 123 located on both sides in the circumferential direction. Therefore, it is possible to suppress the disturbance of the coil 10 and the wedge 30.

Further, in the present embodiment, the connecting step (step S5) is performed after the step of arranging the insulating paper 40. Therefore, after the insulating paper 40 is arranged in the wide slot 24 formed by the first core 120, the second core 220 can be connected to the first core 120 in a state where the insulating paper 40 is held by the first umbrella portions 123 located on both sides in the circumferential direction. Therefore, it is possible to suppress the disturbance of the insulating paper 40.

As described above, the method of manufacturing the stator core 20 and the stator 1 of the present embodiment capable of suppressing the disturbance of at least one of a coil, a wedge, and an insulating paper is suitably used for the coil insertion process of the inserter system.

The embodiment disclosed herein should be considered as an example in all points and not restrictive. The scope of the present invention is shown not by the embodiment described above but by the claims, and it is intended that all modifications within the meaning and scope equivalent to the scope of the claims are included.

### REFERENCE SIGNS LIST

- 1: stator
- 10: coil
- 20: stator core
- 21: core back
- 22: tooth portion
- 23: umbrella portion
- 24: slot
- 30: wedge
- 31: first shape portion
- 32: second shape portion
- 33: bent portion
- 40: insulating paper
- 120: first core
- 122: first tooth portion
- 123: first umbrella portion
- 124: recess
- 220: second core
- 222: second tooth portion
- 223: second umbrella portion
- 223a: protruding portion
- 224: protrusion
- B: blade

## Claims

1. A stator core comprising a first core and a second core included in a tooth portion, the second core being connected to a radially inner side of the first core,
wherein in at least one slot between a plurality of the tooth portions adjacent to each other in a circumferential direction,
the first core includes a first umbrella portion at a radially inner end portion, the first umbrella portion being located on both sides of the slot in the circumferential direction and protruding in the circumferential direction, and
the second core includes a second umbrella portion at a radially inner end portion, the second umbrella portion being located on both sides of the slot in the circumferential direction and protruding in the circumferential direction.

2. The stator core according to claim 1, wherein the first umbrella portion overlaps the second umbrella portion in a radial direction.

3. The stator core according to claim 1 or 2, wherein the first umbrella portion faces the second umbrella portion in a radial direction.

4. The stator core according to any one of claims 1 to 3, wherein
one of the first core and the second core has a recess recessed in a radial direction, and another of the first core and the second core has a protrusion protruding in the radial direction, and
the protrusion is disposed in a recessed portion of the recess and is brought into contact with the recess.

5. The stator core according to claim 4, wherein
the first core has a recess recessed outward in the radial direction,
the second core has a protrusion protruding outward in the radial direction, and
the protrusion is disposed in a recessed portion of the recess and is brought into contact with the recess.

6. A stator comprising:
the stator core according to any one of claims 1 to 5; and
a wedge disposed on a radially inner side of the slot,
wherein the wedge includes:
a first shape portion extending in the circumferential direction;
two second shape portions extending radially outward; and
bent portions connecting both ends of the first shape portion and radially inner ends of the second shape portions, and
the bent portions are brought into contact with the first umbrella portion.

7. The stator according to claim 6, wherein the wedge is brought into contact with the second umbrella portion.

8. The stator according to claim 6 or 7, wherein in the at least one slot, a maximum width in the circumferential direction between the bent portions is equal to or larger than an interval between the first umbrella portions in the circumferential direction.

9. The stator according to any one of claims 6 to 8, wherein
the second umbrella portion includes a protruding portion protruding in the circumferential direction from the first umbrella portion, and
a length of the protruding portion is equal to or larger than a thickness of the wedge.

10. A method of manufacturing a stator core, the method comprising a step of connecting a second core to a radially inner side of a first tooth portion of a first core,
wherein in at least one slot between the tooth portions adjacent to each other in a circumferential direction,
the first core includes a first umbrella portion at a radially inner end portion, the first umbrella portion being located on both sides of the slot in the circumferential direction and protruding in the circumferential direction, and
the second core includes a second umbrella portion at a radially inner end portion, the second umbrella portion being located on both sides of the slot in the circumferential direction and protruding in the circumferential direction.

11. A method of manufacturing a stator, the method comprising:
a step of manufacturing a stator core by the method of manufacturing the stator core according to claim 10; and
a step of arranging a wedge in at least one slot between the tooth portions adjacent to each other in the circumferential direction,
wherein the step of connecting is performed after the step of arranging the wedge.

12. The method of manufacturing the stator according to claim 11, wherein
the first core has a recess that is recessed radially outward,
the second core includes a protrusion disposed in the recess and protruding radially outward,
the method further comprises a step of inserting a coil into a slot formed by the first core, and
in the step of inserting the coil, at least a part of a blade that holds the coil is arranged in the recess.
